# EUROPEAN PATENT APPLICATION

(11) **EP 1 764 924 A2**
(43) Date of publication of application: **21.03.2007**
(21) Application number: 06019289.5
(22) Date of filing: 14.09.2006
(51) Int. Cl.: H04B 1/00

(54) **Dual mode front end module and mobile terminal having the same**

(30) Priority: 16.09.2005 KR 20050087107
(71) Applicant: LG Electronics Inc., Yongdungpo-gu Seoul (KR)
(72) Inventor: Hwang, Il-Youp, Gunpo Gyeonggi-Do (KR); Son, Hun-Young, Nowon-Gu Seoul (KR)
(74) Representative: Urner, Peter

(57) **Abstract**

A mobile terminal includes a dual-mode front end module (FEM) that has an antenna switch module (ASM), a first filtering unit for filtering signals outputted from the ASM, a SPDT switch, a second filtering unit for filtering data signals inputted to the SPDT switch and the data signals outputted from the SPDT switch, and one or more antenna output ports for transmitting or receiving the signals for voice communication and the data signals.

## Description

### BACKGROUND

### 1. Field of the Invention

The present invention relates to a mobile terminal and, more particularly, to a terminal with a dual mode FEM (Front End Module).

### 2. Description of the Related Art

As technology continues to develop, mobile terminals can support not only voice communications, but also, can support WIFI (Wireless Fidelity) functions through wireless LAN access techniques.

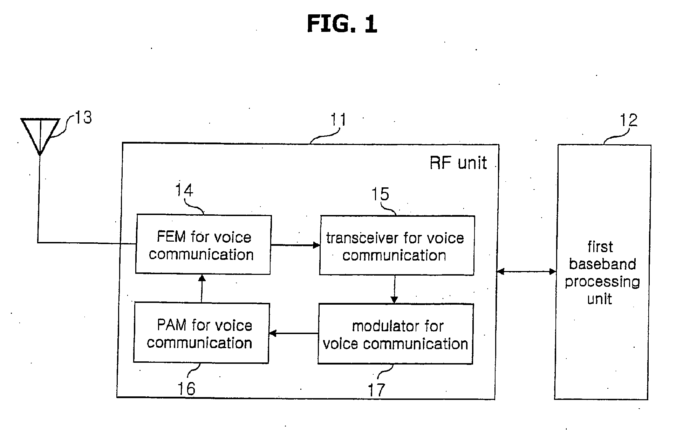

FIG. 1 is a schematic block diagram showing an exemplary structure of a mobile terminal for voice communication according to the related art.

As shown in FIG. 1, the related art mobile terminal for voice communication includes an antenna 13 for receiving reception signals from a base station and transmitting transmission signals to the base station to support voice communications; an RF unit 11 for processing the reception and transmission signals for voice communication at a high frequency level; and a first baseband processing unit 12 for processing the reception signals and the transmission signals for voice communication at a baseband frequency.

The RF unit 11 includes a front end module (FEM) 14 that is used for discriminating transmission signals and reception signals for voice communication; a transceiver 15 for transmitting the reception signals for voice communication to the first baseband processing unit 12 and receiving the transmission signals for voice communication from the first baseband processing unit 12; and a power amplifier module (PAM) 16 for amplifying the transmission signals to support voice communications. Additionally, there may be a modulation unit 17 for modulating the transmission signals for voice communication from the first baseband processing unit 12.

Also, the FEM 14 includes an antenna switch module (ASM) for discriminating the transmission signals and the reception signals, and a filtering unit for filtering the reception signals. The filtering unit includes a low pass filter (LPF), a surface acoustic wave (SAW) filter, and the like.

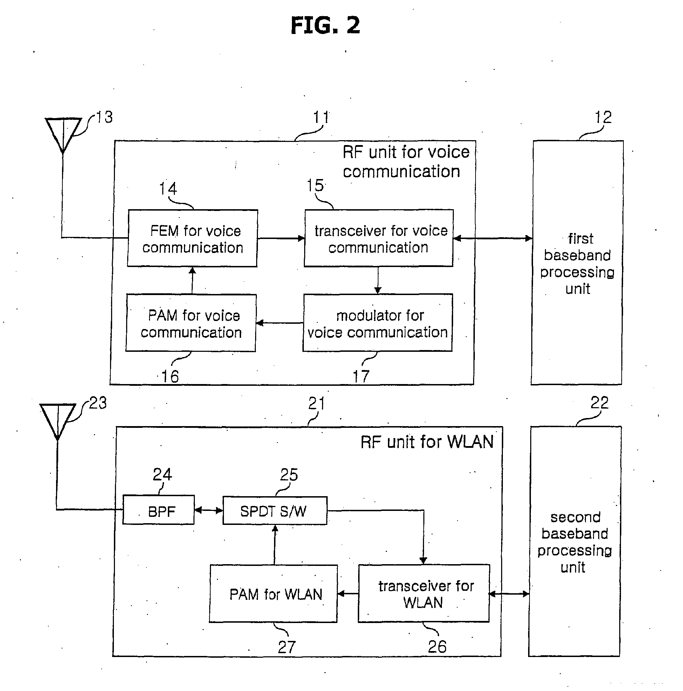

FIG. 2 is a schematic block diagram showing the exemplary structure of a related art mobile terminal having an additional WIFI function.

As shown in FIG. 2, the related art mobile terminal having the WIFI function includes an antenna 23 for receiving reception data signals for a WLAN (Wireless LAN) from a base station and transmitting transmission data signals for the WLAN to the base station; a WLAN RF unit 21 for processing the transmission data signals and the reception data signals for the WLAN at a high frequency level; and a second baseband processing unit 22 for processing the transmission data signals and the reception data signals for the WLAN at a baseband level.

The WLAN RF unit 21 includes a band pass filter 24 for filtering reception data signals and transmission data signals for the WLAN; an SPDT (Single Pole Different Through) switch 25 for discriminating the transmission data signals and the reception data signals for the WLAN for the purpose of transmission or reception; a transceiver 26 for transmitting the reception data signals for the WLAN to the second baseband processing unit 22 and receiving the transmission data signals for the WLAN from the second baseband processing unit 22; and a PAM (Power Amplifier Module) 27 for the WLAN for amplifying the transmission data signals for the WLAN.

As the related art mobile terminal has WIFI functions added thereto, voice communications and WLAN access features can both be supported in a single device. However, because various WLAN components needed to support WIFI functions are included within the mobile terminal, its overall size is undesirably large.

Also, in the related art mobile terminal that supports WIFI functions, many internal components are connected together via strip lines, which causes problems, such as an insertion loss that is generated at each strip line.

### SUMMARY

An important aspect of the present invention is that the present inventors recognized certain problems of the related art, as mentioned above. As a result, the present invention provides a solution to such problems as follows.

One exemplary feature of the present invention is to provide a terminal having a dual-mode front end module (FEM) capable of reducing a volume of a terminal by modularizing an FEM of an RF unit for voice communication, a single pole different through (SPDT) switch and a band pass filter (BPF) of an RF unit for a WLAN as a single chip.

Another exemplary feature of the present invention is to provide a terminal having a dual-mode FEM capable of reducing a loss of a strip line consumed as components of the terminal are connected through the strip line by modularizing an FEM of an RF unit for voice communication, an SPDT switch and a BPF of an RF unit for a WLAN as a single chip.

To achieve the above features, the present invention provides a dual-mode FEM that may include; an antenna switch module (ASM); a first filtering unit for filtering signals for voice communication outputted from the ASM; an SPDT switch; a second filtering unit for filtering data signals inputted to the SPDT switch and the data signals outputted from the SPDT switch; and one or more antenna output ports for transmitting or receiving the signals for voice communication and the data signals.

To implement at least the above features in whole or in parts, the present invention also provides a terminal having a dual-mode FEM that may include: a dual-mode FEM; a first RF unit for processing signals for voice communication outputted from the dual-mode FEM at an RF band; a first baseband processing unit for processing the signals for voice communication outputted from the first RF unit at a baseband; a second RF unit for processing data signals outputted from the dual-mode FEM at a high frequency level; and a second baseband processing unit for processing data signals outputted from the second RF unit at the baseband.

Additional features of the invention will be set forth in part in the description which follows and in part will become apparent to those having ordinary skill in the art upon examination of the following or may be learned from practice of the invention. The features of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
FIG. 1 is a schematic block diagram showing the structure of a mobile terminal for voice communication according to a related art;
FIG. 2 is a schematic block diagram showing the structure of a mobile terminal having a WIFI (Wireless Fidelity) function according to a related art;
FIG. 3 is a layout view of a dual-mode front end module (FEM) according to the present invention; and
FIG. 4 is a schematic block diagram of a mobile terminal having the dual-mode FEM according to the present invention.

### DETAILED DESCRIPTION

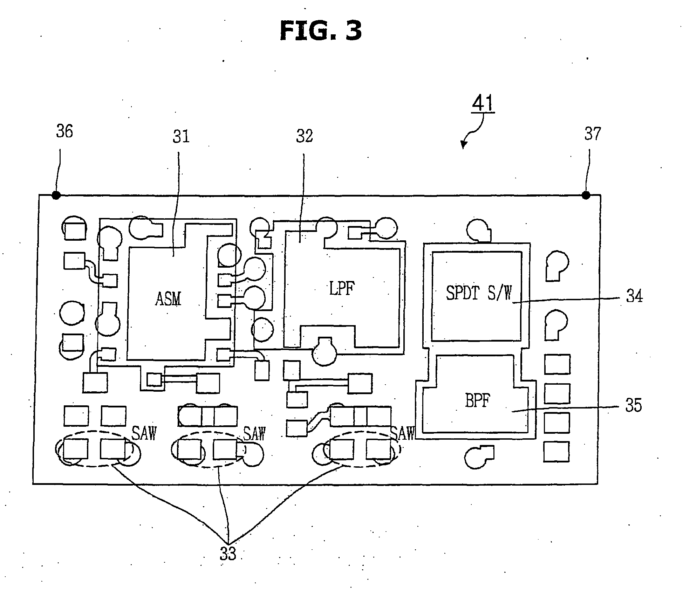

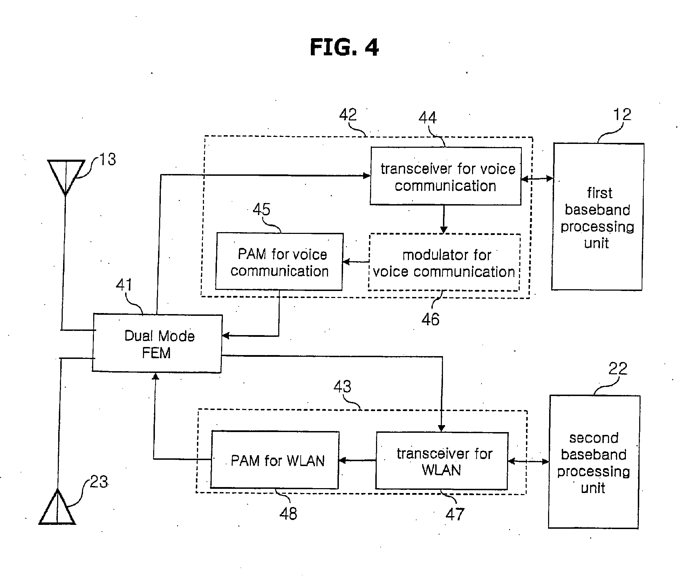

The mobile terminal with a dual-mode front end module (FEM) according to the present invention results in a smaller overall size and improves connectivity between components. This is achieved by modularizing various components, such as an FEM of an RF unit used for voice communication, , a single pole different through (SPDT) switch, and a band pass filter (BPF) of an RF unit used for WLAN (Wireless LAN) connectivity. An exemplary embodiment of the present invention will be described in more detail with reference to FIGs. 3 and 4.

As for the construction and operation method of the terminal, only thoseportions required for understanding the present invention will be described and other portions will be omitted so they may not obscure the gist of the present invention.

FIG. 3 is a layout view of a dual-mode FEM according to the present invention.

First, the dual-mode FEM according to the present invention can perform both a function of an FEM for voice communication and a function of an SPDT switch and a BPF for a wireless LAN. Namely, the FED and the SPDT switch and the BPF can be modularized in the form of a single chip.

As shown in FIG. 3, the dual-mode FEM includes an antenna switch module (ASM) 31; first filtering units 32 and 33 for filtering signals for voice communication outputted from the ASM 31; an SPDT switch 34; a second filtering unit 35 for filtering data signals for the WLAN inputted to the SPDT switch 34 and data signals for the WLAN outputted from the SPDT switch; and one or more antenna output ports 36 and 37 for transmitting or receiving the signals for voice communication and the data signals for the WLAN.

The exemplary circuit layout of the dual-mode FEM will be described in detail as follows.

The multiple antenna output ports 36 and 37 are formed at the dual-mode FEM (41 in Fig. 4 to be described later) to allow the dual-mode FEM to receive the signals for voice communication outputted from a base station and data signals for the WLAN through respective antennas. Herein, of the two antenna output ports 36 and 37, one antenna for receiving the signals for voice communication is formed at one antenna output port and another antenna for receiving the data signals for the WLAN is formed at the other antenna output port.

The first filtering units 32 and 33 filter the signals for voice communication and can be implemented in various types of filters. Preferably, the first filtering units 32 and 33 include a plurality of a surface acoustic wave (SAW) filters 33 and a low pass filter (LPF) 32.

The second filtering unit 35 filters the data signals for the WLAN and can be also implemented in various types of filters. Preferably, the second filtering unit 35 is implemented as a BPF.

Herein, preferably, the antenna switch module 31, the first filtering units 32 and 33, the SPDT switch 34 and the second filtering unit 35 are implemented on a PCB.

The antenna switch module 31, the first filtering units 32 and 33, the SPDT switch 34, the second filtering unit 35 and the antenna output ports 36 and 37 can be formed and covered through a molding technique.

Accordingly, in the dual-mode FEM, the antenna switch module (ASM) 31, the first filtering units 32 and 33, the SPDT switch 34 and the second filtering unit 35, and the antenna output ports 36 and 37 are modularized in the form of a single chip.

In the dual-mode FEM according to the present invention, the connection relationship between respective elements can be easily implemented by a person of ordinary skill in the art based on the connection relationship between respective elements according to the related art, so a description therefor will be omitted

The operation method and function of each element of the dual-mode FEM according to the present invention may be similar as those of the elements of the related art, so a description of such will be also omitted.

The terminal with the dual-mode FEM according to the present invention will be described with reference to FIG. 4.

The dual-mode FEM can be applicable to a GSM mobile terminal, a GPRS mobile terminal, an EDGE mobile terminal, a WCDMA or a CDMA mobile terminal and the like.

FIG. 4 is a schematic block diagram of a terminal having the dual-mode FEM according to the present invention.

As shown in FIG. 4, the terminal with the dual-mode FEM according to the present invention includes: a dual-mode FEM 41; a first RF unit 42 for processing signals for voice communication outputted from the dual-mode FEM at a high frequency level; a first baseband processing unit 12 for processing signals for voice communication outputted from the first RF unit at a baseband frequency; a second RF unit 43 for processing data signals outputted from the dual-mode FEM at a high frequency level; and a second baseband processing unit 22 for processing the data signals outputted from the second RF unit at the baseband frequency. Herein, the terminal with the dual-mode FEM includes a first antenna unit 13 for the signals for voice communication and a second antenna unit 23 for the data signals.

The terminal with the dual-mode FEM according to the present invention will be described in detail as follows.

First, it should be noted that the data signals are for the WLAN.

The first antenna unit 13 receives the signals for voice communication from a base station. In addition, the first antenna unit 13 transmits the signals for voice communication which have been received from the dual-mode FEM 41 to the base station. Herein, because frequency of the signals of voice communication is different from that of the signals for data, the first antenna unit 13 is formed to be different from the second antenna unit 23.

The dual-mode FEM 41 receives the signals for voice communication received from the first antenna unit 13 and transmits the received signals for voice communication to the first RF unit 42. The ASM 31 of the dual-mode FEM checks whether the received signals for voice communication is for reception purposes, and if so, the ASM 31 transmits the received signals for voice communication to the first RF unit 42 through the first filtering units 32 and 33.

In addition, the dual mode FEM 41 receives the signals for voice communication from the first baseband processing unit 12 and transmits the received signals for voice communication to the first antenna unit 13. The ASM 31 of the dual-mode FEM 41 checks whether the received signals for voice communication is for transmission purposes, and if so, the ASM 31 transmits the signals for voice communication to the first antenna unit 13. Herein, the ASM 31 receives the signals for voice communication from the PAM 45 for voice communication of the first RF unit 43.

The first RF unit 32 includes a transceiver 44 for voice communication used for transmitting the signals for voice communication to the first baseband processing unit 12 and receiving signals for voice communication from the first baseband processing unit 12; and a PAM (Power Amplifier Module) 45 for amplifying the signals to support voice communications. The first RF unit 32 processes the signals for voice communication transmitted from the dual mode FEM 41 at a high frequency level and transmits the processed signals for voice communication to the first baseband processing unit 12. The transceiver 44 for voice communication of the first RF unit 32 receives the signals for voice communication from the dual-mode FEM 41 and transmits the received signals for voice communication to the first baseband processing unit 12.

In addition, the first RF unit 42 receives the signals for voice communication from the first baseband processing unit 12, processes the received signals for voice communication at a high frequency level, and transmits the processed signals for voice communication to the dual-mode FEM 41. The transceiver 44 for voice communication receives the signals for voice communication from the first baseband processing unit 12 and transmits the received signals for voice communication to the PAM 45 for voice communication. In this case, when the terminal with the dual-mode FEM according to the present invention is an EDGE mobile terminal, the first RF unit 32 additionally includes a modulation unit 45 for voice communication for modulating the signals for voice communication. The signals for voice communication are transmitted to the PAM 45 for voice communication through the modulation unit 46.

The PAM 45 for voice communication amplifies the received signals for voice communication and transmits the amplified signals for voice communication to the dual-mode FEM 41. Specifically, the PAM 45 for voice communication transmits the amplified signals for voice communication to the ASM 31 of the dual-mode FEM 41.

Meanwhile, the second antenna unit 23 receives the data signals for the WLAN from the base station. In addition, the second antenna unit 23 transmits the data signals for the WLAN which have been received from the dual-mode FEM 41 to the base station.

The dual-mode FEM 41 receives the data signals for the WLAN from the second antenna unit 13 and transmits the received data signals for the WLAN to the second RF unit 42. The SPDT switch 34 of the dual-mode FEM 41 checks whether the signals for the WLAN which have been received through the second filtering unit 35 is for reception purposes, and if so, the SPDT switch 34 transmits the received data signals for the WLAN to the second RF unit 42.

The dual-mode FEM 41 receives the data signals for the WLAN from the second baseband processing unit 22, and transmits the received data signals for the WLAN to the second antenna unit 23. The SPDT switch 34 of the dual-mode FEM 41 checks whether the received data signals for the WLAN is for transmission purposes, and if so, the SPDT switch 34 transmits the data signals for the WLAN to the second antenna unit 23 via the second filtering unit 35. Herein, the SPDT switch 34 receives the data signals for the WLAN from the PAM 48 for the WLAN of the second RF unit 43.

The second RF unit 43 includes a transceiver 47 for transmitting the data signals for the WLAN to the second baseband processing unit 22 and receiving the data signals for the WLAN from the second baseband processing unit 22; and a PAM 48 for the WLAN for amplifying the data signals for the WLAN. The second RF unit 43 processes the data signals for the WLAN transmitted from the dual-mode FEM 41 at a high frequency level, and transmits the processed data signals for the WLAN to the second baseband processing unit 22. The transceiver 47 for the WLAN of the second RF unit 43 receives the data signals for the WLAN from the dual-mode FEM 41 and transmits the received data signals for the WLAN to the second baseband processing unit 22.

In addition, the second RF unit 43 receives the data signals for the WLAN from the second baseband processing unit 22, processes the received data signals for the WLAN at a high frequency level, and transmits the processed data signals for the WLAN to the dual-mode FEM 41. Thetransceiver 47 for the WLAN of the second RF unit 43 receives the data signals for the WLAN from the second baseband processing unit 12 and transmits the received data signals for the WLAN to the PAM 48 for the WLAN.

The PAM 48 for the WLAN amplifies the received data signals for the WLAN and transmits the amplified data signals for the WLAN to the dual-mode FEM 41. Specifically, the PAM 48 for the WLAN transmits the amplified data signals for the WLAN to the SPDT switch 34 of the dual-mode FEM 41.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A dual-mode front end module (FEM) comprising:
an antenna switch module (ASM);
a first filtering unit for filtering signals of a first type that are outputted from the ASM;
a single pole different through (SPDT) switch;
a second filtering unit for filtering signals of a second type that are inputted to the SPDT switch and outputted from the SPDT switch; and
one or more antenna output ports for transmitting or receiving the first and second type signals.

2. The FEM of claim 1, wherein the first filtering unit comprises:
a plurality of surface acoustic wave (SAW) filters; and
a low pass filter (LPF).

3. The FEM of claim 1, wherein the second filtering unit is a band pass filter (BPF).

4. The FEM of claim 1, wherein the ASM, the first filtering unit, the SPDT switch and the second filtering unit are modularized as a single chip.

5. The FEM of claim 1, further comprising:
a cover formed by molding the ASM, the first filtering unit, the SPDT switch, the second filtering unit and the one or more antenna output ports.

6. The FEM of claim 1, wherein the signals of the first type are for voice communication.

7. The FEM of claim 1, wherein the signals of the second type are data signals for a wireless LAN (WLAN).

8. A mobile terminal comprising:
a dual-mode front end module (FEM);
a first RF unit for processing signals of a first type outputted from the dual-mode FEM at an RF band;
a first baseband processing unit for processing the first type signals outputted from the first RF unit at a baseband frequency;
a second RF unit for processing signals of a second type outputted from the dual-mode FEM at a high frequency level; and
a second baseband processing unit for processing the second type signals outputted from the second RF unit at the baseband frequency.

9. The terminal of claim 8, wherein the dual-mode FEM comprises:
an antenna switch module (ASM);
a first filtering unit for filtering the first type signals outputted from the ASM;
a single pole different through (SPDT) switch;
a second filtering unit for filtering the second type signals inputted to the SPDT switch and outputted from the SPDT switch; and
one or more antenna output ports for transmitting or receiving the first and second type signals.

10. The terminal of claim 8, wherein the second type signals are data signals for a wireless LAN (WLAN).

11. The terminal of claim 8, wherein the first RF unit comprises:
a transceiver, used for voice communication, for transmitting the first type signals to the first baseband processing unit and receiving the first type signals from the first baseband processing unit; and
a power amplifier module (PAM) for amplifying the first type signals to support voice communications

12. The terminal of claim 11, further comprising:
a modulation unit for modulating the first type signals outputted from the transceiver.

13. The terminal of claim 8, wherein the second RF unit comprises:
a transceiver, used for a WLAN, for transmitting the second type signals to the second baseband processing unit and receiving the second type signals from the second baseband processing unit; and
a power amplifier module (PAM), used for the WLAN, for amplifying the second type signals.

14. The terminal of claim 8, further comprising:
a first antenna unit for the first type signals; and
a second antenna unit for the second type signals.

15. The terminal of claim 8, wherein the first type signals are for voice communication.
